(19) Europäisches Patentamt
European Patent Office
Office européen des brevets

(11) Veröffentlichungsnummer: **0 143 979**
**B1**

(12) # EUROPÄISCHE PATENTSCHRIFT

(45) Veröffentlichungstag der Patentschrift: **04.01.89**

(51) Int. Cl.[4]: **G 03 G 5/06,** G 03 G 5/09

(21) Anmeldenummer: **84112928.1**

(22) Anmeldetag: **26.10.84**

(54) **Elektrofotografisches Aufzeichnungsmaterial.**

(30) Priorität: **02.11.83 DE 3339540**

(43) Veröffentlichungstag der Anmeldung: **12.06.85 Patentblatt 85/24**

(45) Bekanntmachung des Hinweises auf die Patenterteilung: **04.01.89 Patentblatt 89/1**

(84) Benannte Vertragsstaaten: **CH DE FR GB IT LI**

(56) Entgegenhaltungen: **EP-A-0 061 092**

(73) Patentinhaber: **BASF Aktiengesellschaft, Carl-Bosch- Strasse 38, D-6700 Ludwigshafen (DE)**

(72) Erfinder: **Neumann, Peter, Dr., Franz- Schubert-Strasse 1, D-6908 Wiesloch (DE)**
Erfinder: **Etzbach, Karl- Heinz, Dr., Bensheimer Ring 9a, D-6710 Frankenthal (DE)**
Erfinder: **Hoffmann, Gerhard, Dr., Pappelstrasse 22, D-6701 Otterstadt (DE)**

**EP 0 143 979 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft ein elektrofotografisches Aufzeichnungsmaterial aus einem elektrisch leitfähigen Trägermaterial und einer fotoleitenden Schicht aus organischen Materialien, ein Verfahren zur Herstellung solcher Aufzeichnungsmaterialien und deren Verwendung gemäß den Ansprüchen 1, 4 und 5.

Homogen sensibilisierte Fotoleiterschichten sind bekannt. So beschreibt die US-PS-3 484 237 organische fotoleitende Mischungen aus Poly-(N-vinylcarbazol) und 2,4,7-Trinitrofluorenon-9 in Form einer homogenen Schicht auf einem elektrisch leitfähigen Träger. Weiterhin werden fotoleitfähige Massen aus Poly-(N-vinylcarbazol) und monodispers gelösten Sensibilisatoren auf der Basis von Perylen-3,4:9,10-tetracarbonsäure in der DE-OS-2 841 925 beschrieben.

Andererseits sind Pigmente auf der Basis der Perylen-3,4:9,10-tetracarbonsäure innerhalb elektrofotografischer Aufzeichnungssysteme wohlbekannt, allerdings vorteilhaft in Form einer sogenannten Doppelschicht, d.h., die weitgehend unlöslichen Pigmente werden in einer separaten, Ladungsträger erzeugenden Unterschicht in Kombination mit einer Ladungstransportschicht angeordnet. So werden in der US-PS-3 904 407 Farbstoffe der allgemeinen Formel

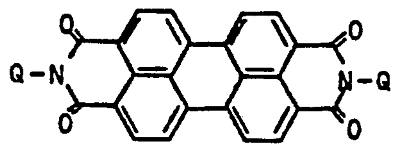

(I)

beansprucht, in der

Q z. B. für Alkyl, Aryl, Alkylaryl, Alkoxy, für einen heterocyclischen Rest, insbesondere für p-Chlorphenyl oder p-Methoxyphenyl stehen.

Ähnlich aufgebaute elektrofotografische Elemente sind Gegenstand der DE-OS-2 237 539, wobei als Ladungsträger erzeugende Pigmente solche der allgemeinen Formel

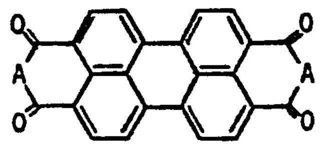

(II)

beansprucht Werden. Dabei kann

A sowohl Sauerstoff als auch N-R sein, worin

R für Wasserstoff, $C_1$- bis $C_4$-Alkyl, für einen gegebenenfalls substituierten Aryl- oder Aralkylrest, für einen heterocyclisten Rest oder für -NHR' stehen, wobei

R' ein gegebenenfalls substituierter Phenyl- oder Benzoylrest ist.

Weitere Pigmente auf der Basis Perylentetracarbonsäure mit der allgemeinen Formel (III), in der B ein ankondensiertes aromatisches System ist, werden in der DE-OS-2 314 051 beschrieben:

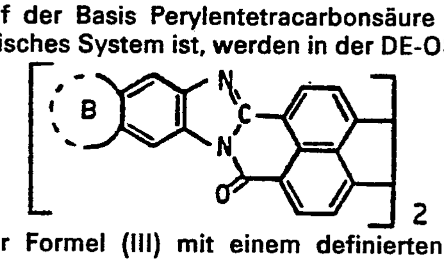

(III)

Chlorierte Pigmente der Formel (III) mit einem definierten Chlorgehalt werden in der DE-OS-3 110 960 beschrieben.

Obwohl die Fotoleitereigenschaften der Schichten mit Poly-(N-vinylcarbazol) und 2,4,7-Trinitrfluorenon-9 sehr gut sind, ist eine technische Verwertung infolge der bedenklichen physiologischen Eigenschaften von Polynitroaromaten als kritisch anzusehen. Andererseits sind die Fotoleiter eigenschaften der bekannten und beschriebenen homogen sensibilisierten Schichten noch ungenügend. So handelt es sich bei den in der DE-OS-2 841 925 offenbarten Perylenfarbstoffen um gelbe bzw. orange Produkte, die - was den Fachmann offensichtlich ist - keine panchromatische Sensibilisierung der Fotoleiterschicht zulassen.

Fotoleitende Doppelschichten sind für ihre guten Fotoleitereigenschaften bekannt. Allerdings ist ihre Herstellung teuer und problematisch. So bereitet insbesondere die Einhaltung vorgegebener Schichtstärken in der Praxis häufig Schwierigkeiten. Weiterhin erschweren die bei der Doppelbeschichtung auftretenden Probleme der undefinierten Grenzschichtbildung eine reproduzierbare Herstellung solcher Doppelschichten, weshalb in der Patentliteratur die Herstellung der Ladungsträgererzeugerschicht mittels der aufwendigen Aufdampftechnik bevorzugt ist.

Aufgabe der Erfindung war es, homogen sensibilisierte Fotoleiterschichten bereitzustellen, die leicht und billig auf die Träger appliziert Werden können, und die vor allem

- ausgezeichnete Fotoleitereigenschaften,
- panchromatisches Absorptionsverhalten und

- gute Löslichkeit in den verwendeten Bindemitteln, vorzugsweise in Poly-(N-vinylcarbazol),

aufweisen.

Diese Aufgabe wird mit Hilfe der erfindungsgemäßen Aufzeichnungsmaterialien gelöst.

Es wurde gefunden, daß hervorragende elektrofotografische Aufzeichnungsmaterialien aus (A) einem den elektrischen Strom leitenden Trägermaterial und (B) einer 0,8 bis 40 µm, vorzugsweise 6 bis 15 µm dicken Fotoleiterschicht aus (a) einem polymeren Bindemittel, das entweder selbst zum Transport von Ladungsträgern des elektrischen Stroms befähigt ist oder das niedermolekulare Ladungstransportverbindungen enthält, (b) Sensibilisatoren zur panchromatischen Sensibilisierung der Schicht und (c) gegebenenfalls weiteren, die Eigenschaften der Fotoleiterschicht verbessernden Zusatzen vorliegen, wenn die Fotoleiterschicht als Sensibilisatoren (b) Verbindungen der Formel

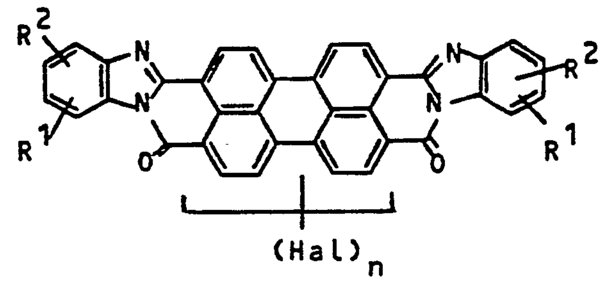

(IV),

in der

$R^1$ für Wasserstoff oder $C_1$- bis $C_8$-Alkyl,

$R^2$ für $C_1$- bis $C_8$-Alkyl,

Hal für Chlor oder Brom und

n für eine ganze Zahl von 2 bis 6 stehen, in einer Konzentration von 0,5 bis 10 Gew.-%, bezogen auf (a + b) enthält und wobei die Sensibilisatoren in der Bindemittelmatrix molekulardispers gelöst sind.

Die erfindungsgemäßen elektrofotografischen Aufzeichnungsmaterialien sind mechanisch stabil, hoch lichtempfindlich über den gesamten sichtbaren Spektralbereich und damit sehr geeignet für reprografische Zwecke, z. B. als Kopierfolie für schnellaufende Normalpapierkopierer.

Überraschend war der Befund, daß die erfindungsgemäßen Schichten nicht nur elektrostatisch negativ sondern auch elektrostatisch positiv beladen werden können, ohne daß die elektrofotografischen Eigenschaften wesentlich differieren. Dem Fachmann ist bekannt, daß Poly-(N-vinylcarbazol) ein Defektelektronenleiter ist, und deshalb für eine optimale Funktion elektrostatisch negativ beladen werden muß. Dies gilt insbesondere für Doppelschichten aus einer pigmenthaltigen Unterschicht und einer Ladungstransportschicht aus im wesentlichen Poly-(N-vinylcarbazol). Dies gilt aber auch für mit 2,4,7-Trinitrofluorenon-9 homogen sensibilisierte Fotoleiterschichten. Deshalb war es von dem Fachmann nicht zu erwarten, daß mit den Farbstoffen (IV) eine positive Beladung der Fotoleiterschicht möglich sein würde.

Für $R^1$ und/oder $R^2$ kommen im einzelnen z. B. in Betracht: Methyl, Ethyl, n-Propyl, iso-Propyl, n-Butyl, sek.-Butyl, iso-Butyl, tert.-Butyl, n-Pentyl, 1,1-Dimethylpropyl, 1,2-Dimethylpropyl, 2,2-Dimethylpropyl, n-Hexyl, n-Heptyl, n-Octyl, 2-Ethylhexyl, von denen n-Butyl bevorzugt ist.

Als Halogen kommen Chlor oder Brom in Betracht. Aus Gründen der Synthese ist Chlor bevorzugt. Allerdings erhält man auch mit Hal = Brom gute Ergebnisse.

Die Farbstoffe der Formel IV sind bekannt (DE-OS-3 148 206) oder können nach an sich bekannten Methoden hergestellt werden.

Die Farbstoffe (IV) liegen als Gemische der bei der Herstellung entstehenden cis- und trans-Formen vor

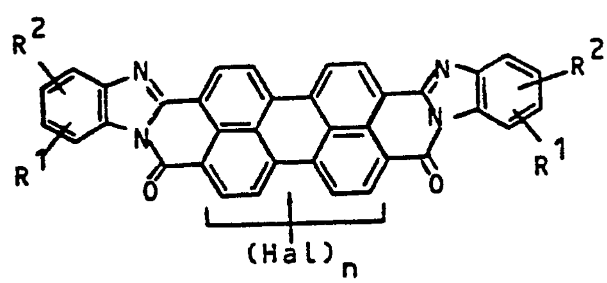

und

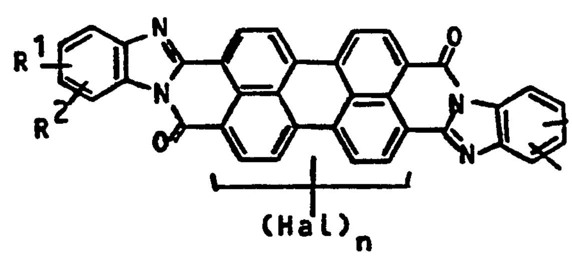

(IV) cis

(IVa) trans

Als weitere, die Eigenschaften der Fotoleiterschicht verbessernde Zusätze (c) kommen solche in Betracht, welche die erfindungsgemäß zu verwendenden Farbstoffe nicht in ihrer Wirkung behindern, z. B.

c1) handelsübliche Weichmacher, wie Phthalsäuredimethylester oder Silikonöl zur Verbesserung der Güte der Oberfläche;

c2) Aktivatoren und/oder Lösungsvermittler.

Die Mengen an (c) können bis zu 25 Gew.-% bezogen auf (a + b) betragen.

Der Anteil an (c1) kann bis zu 15 Gew.-% bezogen auf (a + b) betragen.

Die bevorzugten erfindungsgemäßen elektrofotografischen Aufzeichnungsmaterialien enthalten eine Fotoleiterschicht (B) aus

(a) 90 bis 98 Gew.-% Poly-(N-vinylcarbazol),
(b) 2 bis 10 Gew.-% mindestens eines Farbstoffs der Formel IV, worin $R^1$ für Wasserstoff, $R^2$ für n-Butyl, Hal für Chlor und n für 2, 3, 4 oder 6 stehen, und - bezogen auf (a + b) -
(c) 0 bis 25 Gew.-% weiteren, die Eigenschaften der Fotoleiterschicht verbessernden Zusätzen. Als (c) kommen z. B.
(c1) bis zu 15 Gew.-%, bezogen auf (a + B) eines handelsüblichen Weichmachers, wie Phthalsäuredimethylester und
(c2) Aktivatoren und/oder Lösungsvermitteln als die elektrofotografischen Eigenschaften verbessernde Zusätze in Betracht.

Zusammen mit den Verbindungen (IV) können als polymere Bindemittel (a) außer solchen, die selbst zum Transport von Ladungsträgern des elektrischen Stroms befähigt sind, auch Polymere verwendet werden, die nicht gleichzeitig als Ladungstransportverbindung fungieren können. In diesem Fall müssen diesen Polymeren für die Verwendung als homogen sensibilisierte Fotoleiterschicht zusätzlich eine oder mehrere der bekannten niedermolekularen Ladungstransportverbindungen einverleibt werden. Als Polymere können in diesem Fall alle von ihren Eigenschaften her geeigneten und bekannten Bindemittel verwendet werden, z. B. Polyvinylchlorid, Polyester, Polyacetale, Polycarbonate, Polystyrol und Styrol-Copolymerisate, Silikonharze, Cellulosederivate.

Als niedermolekulare Ladungstransportverbindungen kommen z. B. in Betracht: Pyrazolinderivate, Ooxazole, Oxdiazole, Hydrazonderivate, Triphenylamine, Benztriazole, Pyrenderivate oder Triphenylmethanderivate Bevorzugtes Bindemittel ist Poly-N-vinylcarbazol.

Die erfindungsgemäßen elektrofotografischen Aufzeichnungsmaterialien bestehen aus

1) einem leitfähigen Träger (A)
2) falls erforderlich einer Sperr- und Haftschicht, in einer Dicke von 0,1 bis 0,5 µm, vorzugsweise um 0,2 µm und
3) der elektrofotografischen Schicht (B).

Als Träger (A) sind Aluminiumfolien oder -bleche, Nickelbleche oder mit Metallen bedampfte Kunststoffolien geeignet. Von besonderem Vorteil sind aluminiumbedampfte Polyesterfolien mit einer Dicke von 80 bis 120 µm, wobei die Aluminiumbedampfung etwa 300 bis 500 Å dick sein soll.

Die Sperr- und Haftschichten sind dem Fachmann bekannt: z. B. Metalloxidschichten, Polyacrylate, Polyamide, Polystyrol, Polyvinylalkohol und deren Derivate sowie v.a.m.

Zur Verbesserung der allgemeinen Eigenschaften können der elektrofotografischen Schicht weitere Bestandteile zugemischt werden, Silikonöle zur besseren Oberflächengüte, Sensibilisatoren und Aktivatoren, die die erfindungsgemäßen Farbstoffe in ihrer Wirkung nicht behindern, sondern verstärken, sowie die mechanischen Eigenschaften verbessernde Stoffe, wie z. B. Weichmacher allgemeiner Art.

Zur Herstellung der Aufzeichnungsmaterialien wird zunächst eine 10 gew.-%-ige Lösung des Polymeren in einem geeigneten Lösemittel hergestellt. in diese Lösung werden die erfindungsgemäß zu verwendenden Farbstoffe (IV) in fester Form oder als Lösung eingetragen. Nach Zugabe aller weiteren Zusätze und Filtration der Lösung wird diese in einer solchen Naßschichtdicke auf den leitfähigen Träger aufgebracht, daß nach der Trocknung die homogen sensibilisierte Schicht in der gewünschten Dicke verbleibt.

Die Erfindung wird durch die folgenden Beispiele zusätzlich erläutert.

**Beispiel 1**

1 g Poly-(N-vinylcarbazol) wurde in 9 g Tetrahydrofuran gelöst. Zur homogenen Lösung wurden 0,05 g der Verbindung

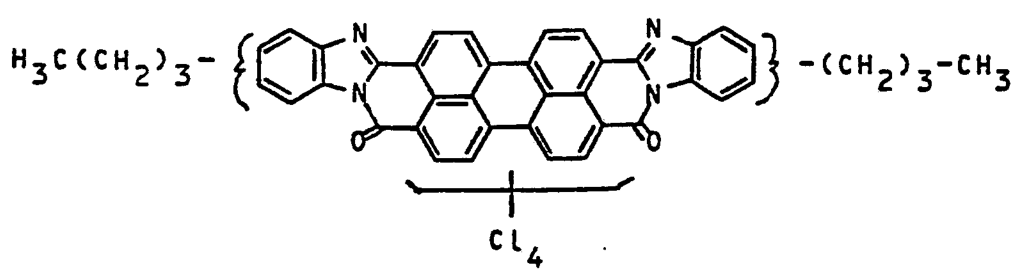

(VI)

gegeben, die durch Kondensation von Tetrachlorperylen-3,4,9,10-tetracarbonsäuredianhydrid mit 4-n-Butylphenylendiamin-1,2 erhalten wurde. Diese Lösung wurde auf ein Aluminiumblech (Dicke 0,1 mm) in einer solchen Naßschichtdicke aufgebracht, daß nach dem Ablüften des Tetrahydrofurans und Trocknen (Dauer: 30 Minuten bei 80° C) eine Trockenschichtdicke von 10 µm hinterblieb. Die Schicht ist tiefblau.

**Vergleichsbeispiel A**

Es wurde wie in Beispiel 1 verfahren, jedoch wurde die Verbindung (VI) durch die entsprechende unchlorierte Verbindung ersetzt wurde. Der Farbstoff löste sich nicht, so daß nach dem Filtrieren eine wasserhelle Lösung des Poly-(N-vinylcarbazols) erhalten wurde.

**Vergleichsbeispiel B**

Es wurde wie in Beispiel 1 verfahren, jedoch wurde (VI) durch die aus der Literatur bekannte Verbindung (VII)

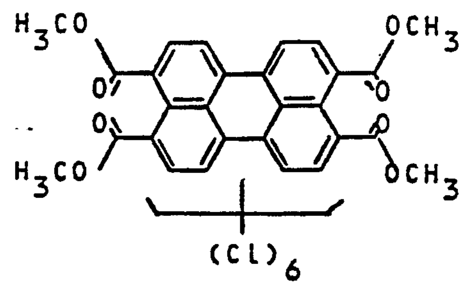

(VII)

(Hexachloroperylen-3,4:9,10)-tetracarbonsäuretetramethylester, DE-OS-2 841 925) ersetzt. Die Schicht ist intensiv gelb gefärbt.

**Beispiel 2**

In einer Lösung aus 1 g Poly-(N-vinylcarbazol) und 9 g Tetrahydrofuran wurden gelöst: 0,05 g der Verbindung (VI) und 0,10 g der Verbindung (VII). Damit konnte ein im Weißlicht schwarz aussehendes Aufzeichnungsmaterial hergestellt werden.

**Beispiel 3**

Mit einer Lösung aus 1 g eines Copolymerisats aus 70 Gew.-% Styrol, 24 Gew.-% Acrylsäure und 6 Gew.-% Maleinsäureanhydrid mit einem mittleren Molekulargewicht von 1800, 0,08 g der Verbindung (VI) und 0,8 g 2-(p-Diethylaminophenyl)-benztriazol-1,2,3 wird eine 8 µm dicke Fotoleiterschicht hergestellt. Diese Schicht ist tiefblau.

Mit den nach den Beispielen und den Vergleichsbeispielen erhaltenen Aufzeichnungsmaterialien wurden folgende Versuche durchgeführt: Das Aufzeichnungsmaterial wurde in getrennten Versuchen jeweils positiv und negativ beladen. Dazu wurde eine Corona mit +8 KV bzw. -8 KV in einem Abstand von 10 mm über der Schichtoberfläche benützt. Nach 20 Sekunden Beladungszeit wurde das Oberflächenpotential gemessen. Dann verblieben die beladenen Schichten 20 Sekunden lang im Dunkeln. Danach wurde der inzwischen eingetretene

Potentialabfall in % vom gemessenen Ausgangspotential ermittelt. Dann wurde jeweils eine Probe 1 Sekunde lang mit dem Licht einer Xenonhochdrucklampe belichtet, und zwar

a) mit dem ungefilterten Weißlicht, Beleuchtungsstärke in Schichtebene: 60 $\mu W \cdot cm^{-2}$,
b) mit dem mittels eines Interferentfilters (Maximum bei 589 nm) gefilterten Licht, Beleuchtungsstärke in Bildebene: 6 $\mu W \cdot cm^{-2}$;
c) mit dem mittels eines Interferentfilters (Maximum bei 650 nm) gefilterten Licht, Beleuchtungsstärke in Bildebene: 10 $\mu W \cdot cm^{-2}$.

Dann wird der durch diese Belichtung eingetretene Potentialabfall in % ermittelt. Die erhaltenen Ergebnisse sind in der Tabelle 1 zusammengestellt.

Die Zusammenstellung zeigt, daß die erfindungsgemäßen Farbstoffe den Stand der Technik deutlich übertreffen.

**Tabelle 1:** Meßergebnisse

| Versuch | Beladung | maximales Oberflächen-potential | Potentialabfall in 20" im Dunkeln[1] | fotoinduzierter Potentialabfall[1] bei | | |
|---|---|---|---|---|---|---|
| | | | | Weiß-licht | 589 nm | 650 nm |
| | | [V] | [%] | [%] | [%] | [%] |
| Beispiel 1 | positiv | 1550 | 8,3 | 96,2 | 82,4 | 82,0 |
| | negativ | - 1800 | 17,0 | 92,0 | 47,9 | 62,0 |
| Vergleichs-beispiel A | unlöslich | | | | | |
| Vergleichs-beispiel B | positiv | 2300 | 26,4 | 81,2 | 2,5 | 0 |
| | negativ | - 2850 | 20,6 | 78,6 | 0,8 | 0 |
| Beispiel 2 | positiv | 1800 | 14,8 | 88,4 | 83,8 | 81,6 |
| | negativ | - 2100 | 12,1 | 81,9 | 42,2 | 62,0 |
| Beispiel 3 | positiv | 660 | 15,1 | 39,0 | - | - |
| | negativ | - 850 | 19,5 | 42,5 | 39,0 | 37,2 |

[1] bezogen auf das Ausgangspotential (Spalte 3)

## Patentansprüche

1. Elektrofotografisches Aufzeichnungsmaterial aus im wesentlichen

(A) einem den elektrischen Strom leitenden Trägermaterial, und
(B) einer 0,8 bis 40 µm, vorzugsweise 6 bis 15 µm dicken Fotoleiterschicht aus
(a) einem polymeren Bindemittel, das entweder selbst zum Transport von Ladungsträgern des elektrischen Stroms befähigt ist, oder das niedermolekulare Ladungstransportverbindungen enthält,
(b) Sensibilisatoren zur panchromatischen Sensibilisierung der Schicht und
(c) gegebenenfalls weiteren, die Eigenschaften der Fotoleiterschicht verbessernden Zusätzen,

dadurch gekennzeichnet, daß als Sensibilisatoren (b) Verbindungen der Formel

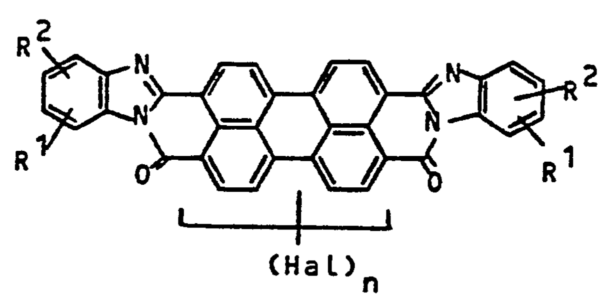

,

in der $R^1$ für Wasserstoff oder $C_1$- bis $C_8$-Alkyl, $R^2$ für $C_1$- bis $C_8$-Alkyl, Hal für Chlor oder Brom und n für eine ganze Zahl von 2 bis 6 stehen, in einer Konzentration von 0,5 bis 10 Gew.-%, bezogen auf (a + b) verwendet werden und wobei die Sensibilisatoren in der Bindemittelmatrix molekulardispers gelöst sind.

2. Elektrofotografisches Aufzeichnungsmaterial gemäß Anspruch 1, dadurch gekennzeichnet, daß als (b) ein Perylen-3,4,9,10-tetracarbonsäurebisbenzimidazol der im Anspruch 1 angegebenen Formel verwendet wird, in der $R^2$ für Butyl, $R^1$ für Wasserstoff, Hal für Chlor und n für 4 stehen.

3. Elektrofotografisches Aufzeichnungsmaterial gemäß Anspruch 1 oder 2, dadurch gekennzeichnet, daß man als Bindemittel, das zum Transport von Ladungsträgern befähigt ist, Poly-(N-vinylcarbazol) verwendet.

4. Verfahren zur Herstellung elektrofotografischer Aufzeichnungsmaterialien durch Beschichten eines den elektrischen Strom leitenden Trägermaterials (A) in an sich bekannter Weise mit einer 0,8 bis 40 µm, vorzugsweise 6 bis 15 µm dicken Fotoleiterschicht (B) aus einem Sensibilisatoren (b) und gegebenenfalls weitere übliche, die Eigenschaften der Fotoleiterschicht verbessernde Zusätze (c) enthaltenden polymeren Bindemittel (a), das entweder selbst zum Transport von Ladungsträgern des elektrischen Stroms befähigt ist oder das niedermolekulare Ladungstransportverbindungen enthält, dadurch gekennzeichnet, daß das polymere Bindemittel (a) als Sensibilisatoren (b) zur panchromatischen Sensibilisierung Verbindungen der Formel

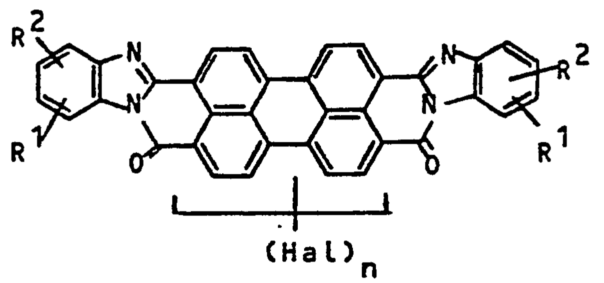

,

in der $R^1$ für Wasserstoff oder $C_1$ bis $C_8$-Alkyl, $R^2$ für $C_1$ bis $C_8$ -Alkyl, Hal für Chlor oder Brom und n für eine ganze Zahl von 2 bis 6 stehen, in einer Konzentration von 0,5 bis 10 Gew.-%, bezogen auf die Fotoleiterschicht enthält und wobei die Sensibilisatoren in der Bindemittelmatrix molekulardispers gelöst sind.

5. Verwendung der elektrofotografischen Aufzeichnungsmaterialien gemäß den Ansprüchen 1 bis 3 für reprografische Zwecke.

**Claims**

1. An electrophotographic recording material essentially consisting of

(A) an electrically conductive base, and
(B) a 0.8 - 40 µm, preferably 6 - 15 µm, thich photoconductor layer containing
 (a) a polymeric binder which either is itself capable of transport ing charge cariers or contains low molecular weight charge-transporting compounds,
 (b) sensitizers for panchromatic sensitization of the layer,
 (c) with or without further additives which improve the properties of the photoconductor layer,

wherein the sensitizers (b) used are compounds of the formula

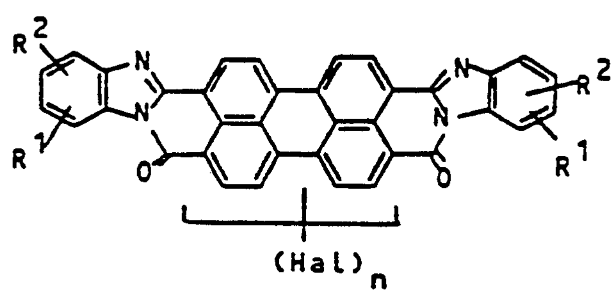

where $R^1$ is hydrogen or $C_1$-$C_8$-alkyl, $R^2$ is $C_1$-$C_8$-alkyl, Hal is chlorine or bromine and n is an integer from 2 to 6, in a concentration of from 0.5 to 10 % by weight, based on (a + b), and the sensitizers are dissolved in the binder matrix to give a molecular-disperse solution.

2. An electrophotographic recording material as claimed in claim 1, wherein, as (b), a perylene-3,4,9,10-tetracarboxybisbenzimidazole of the formula given in claim 1 is used, where $R^2$ is butyl, $R^1$ is hydrogen, Hal is chlorine and n is 4.

3. An electrophotographic recording material as claimed in claim 1 or 2, wherein poly-(N-vinylcarbazole) is used as the binder capable of transporting charge carriers.

4. A process for the production of an electrophotographic recording material by coating an electrically conductive base (A) in a conventional manner with a 0.8 - 40 µm, preferably 6 - 15 µm, thick photoconductor layer (B) which comprises a polymeric binder (a) containing sensitizers (b) with or without further conventional additives (c) which improve the properties of the photoconductor layer, which binder either is itself capable of transporting charge carriers or contains low molecule weight charge-transporting compounds, wherein the polymeric binder (a) contains, as sensitizers (b) for panchromatic sensitization, compounds of the formula

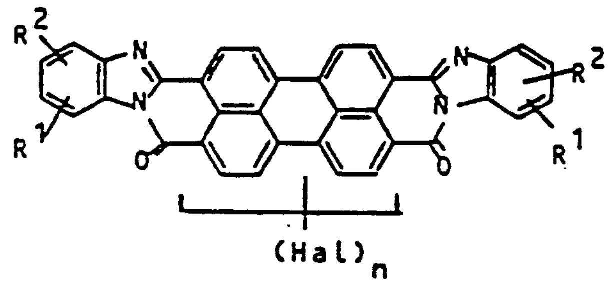

where $R^1$ is hydrogen or $C_1$-$C_8$-alkyl, $R^2$ is $C_1$-$C_8$-alkyl, Hal is chlorine or bromine and n is an integer from 2 to 6, in a concentration of from 0.5 to 10 % by weight, based on the photoconductor layer, and the sensitizers are dissolved in the binder matrix to give a molecular-disperse solution.

5. Use of an electrophotographic recording material as claimed in any of claims 1 to 3 for reprographic purposes.

**Revendications**

1. Matériel d'enregistrement électrophotographique, se composant essentiellement de:

(A) une matière de support conduisant le courant électrique, et
(B) une couche photoconductrice de 0,8 à 40 µm, de préférence de 6 à 15 µm d'epaisseur, se conposant
(a) d'un liant polymère qui est apte par lui-même au transport de porteurs de charge du courant électrique ou qu'i contient des composés de bas poids moléculaire capables de transport de charge,
(b) de sensibilisateurs pour la sensibilisation panchromatique de la couche et
(c) le cas échéant, d'autres additifs améliorant les caractéristiques de la couche photoconductrice,

caractérisé en ce qu'on utilise, comme sensibilisateurs (b), des composes de formule

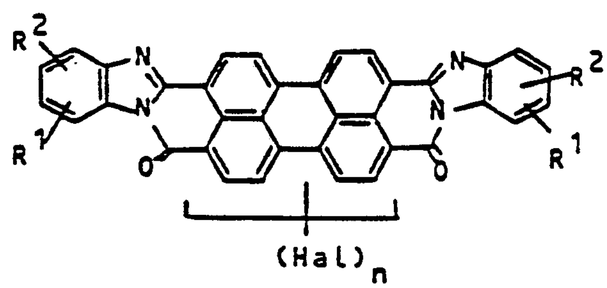

,

dans laquelle $R^1$ est mis pour un atome d'hydrogène ou un radical alkyle en $C_1$ à $C_8$, $R^2$ pour un radical alkyle en $C_1$ à $C_8$, Hal pour un atome de chlore ou de brome et n pour un nombre entier de 2 à 6, dans une concentration de 0,5 à 10 % en poids sur la base de (a + b), les sensibilisateurs étant dissous à l'état de dispersion moléculaire dans la matrice de liant.

2. Matériel d'enregistrement électrophotographique selon la revendication 1, caractérisé en ce qu'on utilise, comme substance (b), un pérylène-3,4,9,10-tétracarboxy-bis-benzimidazole répondant à la formule indiquée dans la revendication 1, dans laquelle $R^2$ est mis pour un radical butyle, $R^1$ pour un atome d'hydrogène, Hal pour un atome de chlore et n pour 4.

3. Matériel d'enregistrement électrophotographique selon la revendication 1 ou 2, caractérisé en ce qu'on utilise un poly-(N-vinylcarbazole) en tant que liant qui est apte au transport de porteurs de charge.

4. Procédé de fabrication de matériels d'enregistrement électrophotographique par enduction d'une matière de support conduisant le courant électrique (A), de façon connue en soi, avec une couche photoconductrice (B) de 0,8 à 40 µm, de préférence de 6 à 15 µm d'épaisseur, se composant d'un liant polymère (a) qui contient des sensibilisateurs (b) et éventuellement d'autres additifs (c) améliorant les caractéristiques de la couche photoconductrice et qui est apte par lui-même au transport de porteurs de charge du courant électrique ou qui

contient des composés de bas poids moléculaire capables de transport de charge, caractérisé en ce que le liant polymère (a) contient, en tant que sensibilisateurs (b) pour la sensibilisation panchromatique, des composés de formule

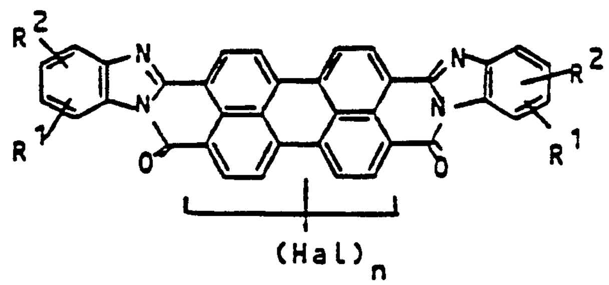

,

dans laquel le $R^1$ est mis pour un atome d' hydrogène ou un radical alkyle en $C_1$ à $C_8$, $R^2$ pour un radical alkyle en $C_1$ à $C_8$ Hal pour un atome de chlore ou de brome et n pour un nombre entier de 2 à 6, dans une concentration de 0,5 à 10 % en poids sur la base de la couche photoconductrice, les sensibilisateurs étant dissous à l'état de dispersion moléculaire dans la matrice de liant.

5. Utilisation des matériels d'enregistrement électrophotographique selon l'une quelconque des revendications 1 à 3 à des fins de reprographie.